# EUROPÄISCHE PATENTANMELDUNG

(11) **EP 2 081 073 A1**
(43) Veröffentlichungstag der Anmeldung: **22.07.2009**
(21) Anmeldenummer: 08105757.2
(22) Anmeldetag: 11.11.2008
(51) Int. Cl.: G02B 27/00

(54) **Kondensationsfalle für feuchtigkeitsempfindliche Geräte**

(30) Priorität: 16.01.2008 DE 102008004642
(71) Anmelder: ROBERT BOSCH GMBH, 70442 Stuttgart (DE)
(72) Erfinder: Hild, Heiner, 71642, Ludwigsburg (DE)

(57) **Zusammenfassung**

Die Erfindung betrifft eine Vorrichtung (110), umfassend mindestens ein feuchtigkeitsempfindliches Bauelement (118) mit mindestens einer feuchtigkeitsempfindlichen Oberfläche (120) sowie mindestens eine Abschirmvorrichtung (129) zur Abschirmung des feuchtigkeitsempfindlichen Bauelements (118) vor Feuchtigkeit. Die Abschirmvorrichtung (129) weist mindestens ein Gehäuse (112) auf, welches eingerichtet ist, um in mindestens einem Innenraum (114) des Gehäuses (112) das feuchtigkeitsempfindliche Bauelement (118) aufzunehmen. Die Vorrichtung (110) weist mindestens eine dem Innenraum (114) zuweisende feuchtigkeitsunempfindliche Kondensationsoberfläche (128) auf, welche mindestens die 100-fache Oberfläche im Vergleich zur feuchtigkeitsempfindlichen Oberfläche (120) aufweist.

## Beschreibung

### Stand der Technik

Die Erfindung geht aus von bekannten Geräten, welche feuchtigkeitsempfindliche Bauelemente enthalten. Beispiele derartiger Geräte sind insbesondere im Bereich der Optik und/oder im Bereich der Elektronik zu finden, in welchen beispielsweise optische Komponenten, wie zum Beispiel Linsen, Spiegel, Bildsensoren, optische Gitter, Bildsensoren oder ähnliche optische Komponenten vor Feuchtigkeit geschützt werden müssen. Andere Beispiele aus dem Stand der Technik sind elektronische Vorrichtungen bzw. Geräte, welche empfindliche elektronische Bauelemente umfassen.

Konstruktiv werden derartige Vorrichtungen bzw. Geräte (diese Begriffe werden im Folgenden synonym verwendet) im Stand der Technik häufig nach zwei unterschiedlichen Konzepten ausgelegt. In einem ersten Konzept kann die gesamte Vorrichtung feuchtigkeits- bzw. dampfdicht ausgelegt werden, beispielsweise in Form eines feuchtigkeits- und/oder dampfdichten Gehäuses. Gegebenenfalls kann im Inneren dieser Vorrichtung bzw. des Gehäuses noch ein Trocknungsmittel untergebracht sein, welches auf chemischem Wege die Feuchtigkeit reduziert. Zudem wird üblicherweise während der Montage der Vorrichtung auf hinreichend trockene Umgebungsbedingungen geachtet.

Ein Beispiel von Vorrichtungen, welche nach diesem ersten Konzept konstruiert sind, ist in DE 10 2004 045 395 A1 offenbart. Dabei wird ein Bildaufnahmesystem mit einem Bildsensor und einem optischen System beschrieben, wobei das optische System eine Mehrzahl von in einem Tubus angeordneten optischen Elementen umfasst. Diese optischen Elemente sind derart hintereinander gestaffelt angeordnet, dass sie Zwischenräume zwischen sich einschließen. Jeder dieser Zwischenräume ist über eine gasdurchlässige Verbindung mit einem Reservoir für ein Trocknungsmittel verbunden.

Ein zweites Konzept zur konstruktiven Abschirmung feuchtigkeitsempfindlicher Bauelemente besteht darin, die Konstruktion, beispielsweise ein Gehäuse der Vorrichtung, dampfoffen auszugestalten. In diesem Fall kann zwar Feuchtigkeit in das Innere der Vorrichtung, beispielsweise in das Gehäuse, eindringen, kann jedoch ebenso auch wieder austreten.

Die aus dem Stand der Technik bekannten Konzepte weisen jedoch in der Praxis mehrere Nachteile auf. So kann beispielsweise bei dem ersten beschriebenen Konzept über einen längeren Zeitraum hinweg Feuchtigkeit in das Gerät, beispielsweise das Gehäuse des Geräts, eindringen. Ist ein Trocknungsmittel vorgesehen, so wird in der Regel dieses Trocknungsmittel zunächst mit Feuchtigkeit gesättigt. Nach Sättigung des Trocknungsmittels tritt dann jedoch in vielen Fällen eine unerwünschte Kondensation im Inneren des Gerätes auf, was zu einer funktionalen Beeinträchtigung des Geräts oder einer Beschädigung führen kann.

Bei dem zweiten vorgeschlagenen Konzept kann durch ungünstige Temperaturverläufe zumindest temporär eine Kondensation stattfinden. Diese Kondensation, welche beispielsweise an feuchtigkeitsempfindlichen Komponenten stattfinden kann, kann ebenfalls zu einer funktionalen Beeinträchtigung oder sogar einer Beschädigung des Geräts führen.

### Offenbarung der Erfindung

Es wird daher eine Vorrichtung vorgeschlagen, welche die Beeinträchtigungen oder Beschädigungen bekannter Vorrichtungen infolge einer Kondensation von unerwünscht in die Vorrichtung eingedrungener Feuchtigkeit reduzieren kann.

Ein Grundgedanke der vorliegenden Erfindung besteht darin, dass bei Vorrichtungen, welche nur teilweise feuchtigkeitsempfindlich sind (zum Beispiel bei elektro-optischen Systemen im Wesentlichen die Oberflächen von Linsen und Imagem oder LIDs, d.h. Schutzgläsem, Schutzplättchen oder allgemein Schutzvorrichtungen) die Beeinträchtigung durch Kondensation reduziert werden kann, indem die Oberfläche unempfindlicher Bereiche (zum Beispiel die Oberfläche von Gehäusebereichen) künstlich vergrößert wird bzw. eine derartige künstlich vergrößerte Oberfläche neu eingeführt wird. Diese künstlich vergrößerte Oberfläche wird im Folgenden auch als "Kondensationsoberfläche" bezeichnet.

Setzt man in erster Näherung eine materialunabhängige Kondensationsneigung und eine gleichmäßige Temperierung voraus, so ist die Menge des Kondensats proportional zur vorhandenen Oberfläche. Damit kondensiert bei gleicher Feuchtigkeitsmenge im Inneren ein kleinerer Anteil der vorhandenen Feuchtigkeit auf den feuchtigkeitsempfindlichen Oberflächen feuchtigkeitsempfindlicher Bauelemente. Dies kann beispielsweise bei einem optischen und/oder elektro-optischen System und/oder einem elektronischen System zu einem noch akzeptablen Film anstelle inakzeptabler Tröpfchen auf der bzw. den feuchtigkeitsempfindlichen Oberflächen führen.

Es wird daher eine Vorrichtung vorgeschlagen, welche mindestens ein feuchtigkeitsempfindliches Bauelement mit mindestens einer feuchtigkeitsempfindlichen Oberfläche umfasst. Wie oben beschrieben kann das feuchtigkeitsempfindliche Bauelement beispielsweise ein Bauelement aus dem Bereich der Optik, der Optoelektronik oder der Elektronik sein. Auch in anderen Bereichen der Naturwissenschaften und Technik sind jedoch feuchtigkeitsempfindliche Bauelemente bekannt. Im Bereich der Optik kann das mindestens eine feuchtigkeitsempfindliche Bauelement beispielsweise ein optisches Bauelement, insbesondere eine Linse, ein optisches Gitter, eine Blende, einen Spiegel oder eine Kombination derartiger Bauelemente umfassen. Weiterhin kann das feuchtigkeitsempfindliche Bauelement ein Sensorbauelement, insbesondere ein optisches Sensorbauelement, ein akustisches Sensorbauelement oder einen Temperatursensor oder eine Kombination der genannten Sensorbauelemente umfassen. Weiterhin sind insbesondere auch Bildaufnehmer als feuchtigkeitsempfindliche Bauelemente zu nennen. Hier sind beispielsweise CCD-Chips oder andere Arten der Bildaufnehmer zu erwähnen. Auch LIDs oder andere Arten von Schutzelementen sind möglich. Weiterhin sind, ebenfalls alternativ oder zusätzlich, elektronische Bauelemente zu nennen, welche ganz oder teilweise feuchtigkeitsempfindliche Eigenschaften haben, das heißt deren Funktion durch Feuchtigkeit, insbesondere durch Kondensation von Feuchtigkeit an den feuchtigkeitsempfindlichen Oberflächen, beeinträchtigt werden kann.

Die Vorrichtung kann beispielsweise eine Bildgebungsfunktion aufweisen und kann somit beispielsweise analog zur Vorrichtung in DE 10 2004 045 395 A1 ausgestaltet sein. Insbesondere kann die Vorrichtung somit ein Bildaufnahmesystem der dort beschriebenen Art sein bzw. umfassen, mit einem Bildsensor und einer Mehrzahl von in einem Gehäuse in Form eines Tubus angeordneten optischen Elementen, welche hintereinander gestaffelt angeordnet sind. Auch andere Arten der Vorrichtung sind jedoch selbstverständlich möglich.

Die Vorrichtung umfasst erfindungsgemäß mindestens eine Abschirmvorrichtung zur Abschirmung des feuchtigkeitsempfindlichen Bauelements vor Feuchtigkeit. Diese Abschirmvorrichtung weist mindestens ein Gehäuse auf, welches eingerichtet ist, um in mindestens einem Innenraum des Gehäuses das feuchtigkeitsempfindliche Bauelement aufzunehmen. Das Gehäuse kann ein einstückiges Gehäuse sein, kann sich jedoch auch aus mehreren Teilen zusammensetzen und kann beispielsweise aus keramischen und/oder metallischen Werkstoffen und/oder Kunststoffen zusammengesetzt sein. Das mindestens eine feuchtigkeitsempfindliche Bauelement kann ganz oder teilweise in dem Innenraum aufgenommen sein. Unter einer teilweisen Aufnahme ist dabei insbesondere eine Aufnahme zu verstehen, bei welcher die mindestens eine feuchtigkeitsempfindliche Oberfläche des feuchtigkeitsempfindlichen Bauelements im Inneren des Innenraums angeordnet ist. Andere Bestandteile des feuchtigkeitsempfindlichen Bauelements, wie beispielsweise Zuleitungen, Halterungen oder ähnliches, können auch außerhalb des Innenraums angeordnet sein.

Der Innenraum kann beispielsweise als zylinderförmiger Innenraum, als quaderförmiger Innenraum oder als beliebig ausgestalteter Innenraum ausgeformt sein. Besonders bevorzugt im Rahmen der vorliegenden Erfindung ist es, wenn das Gehäuse diesen Innenraum luftdicht abschließt. Unter "luftdicht" ist dabei ein Abschließen zu verstehen, was ein Eindringen von Feuchtigkeit aus einer Außenumgebung in den Innenraum im Wesentlichen ausschließt, so dass insbesondere eine Dampfdichtigkeit bestehen kann. Es ist jedoch nicht notwendigerweise eine Vakuumdichtigkeit zu fordern, wie dies beispielsweise an Vakuumbauteile zu stellen wäre. So ist unter "luftdicht" auch eine Abschottung zu verstehen, bei welcher ein Nachströmen von Außenluft durch die Gehäusewand bzw. durch Dichtungen im Vergleich zu den nachfolgend beschriebenen Kondensationseffekten eine untergeordnete Rolle spielt, so dass beispielsweise eine Eintragsrate von Feuchtigkeit aus dem Außenbereich in den Innenraum um mindestens ein bis zwei Größenordnungen geringer ist als eine Entfernung von Feuchtigkeit aus dem Innenraum durch Kondensationseffekte.

Um den oben beschriebenen Gedanken der Bereitstellung einer feuchtigkeitsunempfindlichen Kondensationsoberfläche zu realisieren, ist die Vorrichtung derart eingerichtet, dass diese mindestens eine dem Innenraum zuweisende feuchtigkeitsunempfindliche Kondensationsoberfläche aufweist. Diese Kondensationsoberfläche kann beispielsweise Bestandteil des Gehäuses sein und mit diesem einstückig ausgebildet sein. Alternativ oder zusätzlich kann die mindestens eine Kondensationsoberfläche jedoch auch Bestandteil eines sonstigen Bauteils der Vorrichtung sein und lediglich in den Innenraum hineinragen. Insofern ist klar, dass beispielsweise im Rahmen der obigen Ausführungsform, in welcher das Gehäuse den Innenraum luftdicht abschließt, das Gehäuse für diesen luftdichten Abschluss auch mit anderen, nicht dem Gehäuse zuzurechnenden Elementen der Vorrichtung zusammenwirken kann. So können beispielsweise die feuchtigkeitsempfindlichen Bauelemente und/oder Bauelemente, welche die feuchtigkeitsunempfindlichen Kondensationsoberflächen aufweisen, durch das Gehäuse hindurch in den Innenraum hineinragen und an ihrem Übergang zum Gehäuse eine Dichtung aufweisen.

Die Kondensationsoberfläche ist, wie oben beschrieben, erfindungsgemäß derart ausgestaltet, dass diese die feuchtigkeitsempfindliche Oberfläche des feuchtigkeitsempfindlichen Bauelements von ihrer Gesamtfläche her erheblich übersteigt. So ist es erfindungsgemäß vorgesehen, wenn die Kondensationsoberfläche mindestens die 100-fache Oberfläche im Vergleich zur feuchtigkeitsempfindlichen Oberfläche aufweist. Besonders bevorzugt ist sogar ein größeres Flächenverhältnis, beispielsweise ein Flächenverhältnis von mindestens 500 : 1, insbesondere 1000 : 1 oder darüber, besonders bevorzugt sogar 10.000 : 1 oder mehr.

Diese feuchtigkeitsunempfindliche Kondensationsoberfläche kann beispielsweise eine Vielzahl von Materialien aufweisen. Als Beispiel sind wiederum Kunststoffe, Metalle oder Keramiken bzw. Kombinationen dieser Werkstoffe zu nennen. Wenn die Kondensationsoberfläche einstückig mit dem Gehäuse ausgebildet wird, so weist diese vorzugsweise auch das bzw. die Materialien des Gehäuses auf. Insbesondere sollte die Materialauswahl derart erfolgen, dass die Kondensationsoberfläche beschlagsunempfindlich ist, das heißt beispielsweise mit Feuchtigkeit nicht oder lediglich geringfügig chemisch reagiert, in feuchter Umgebung nicht korrodiert oder keine anderen Eigenschaften in irgendeiner Weise wesentlich ändert.

Für die Realisierung der Oberflächenvergrößerung der Kondensationsoberfläche im Vergleich zur feuchtigkeitsempfindlichen Oberfläche des feuchtigkeitsempfindlichen Bauelements ist im Prinzip jede Art und Technik der Oberflächenvergrößerung einsetzbar. So kann die feuchtigkeitsunempfindliche Kondensationsoberfläche insbesondere die gesamte, dem Innenraum zuweisende Oberfläche des Gehäuses umfassen oder zumindest einen wesentlichen Teil dieser Oberfläche (zum Beispiel 50 % oder mehr). In dieser Ausführungsform sind beispielsweise sämtliche, dem Innenraum zuweisenden Oberflächen, mit Ausnahme der feuchtigkeitsempfindlichen Oberfläche des feuchtigkeitsempfindlichen Bauelements als Kondensationsoberfläche nutzbar. Auch nicht-feuchtigkeitsempfindliche Oberflächen des feuchtigkeitsempfindlichen Bauelements selbst sind als Kondensationsoberflächen einsetzbar. So kann beispielsweise ein Bildgebungs-Chip eine feuchtigkeitsempfindliche, sensitive Oberfläche umfassen, welche beispielsweise identisch zu der bildsensitiven Oberfläche sein kann, wohingegen übrige Bestandteile und Oberflächen, beispielsweise Gehäuseoberflächen des Chips, unempfindlich sein können und somit als Kondensationsoberflächen zusätzlich zur Verfügung stehen können.

Zur Oberflächenvergrößerung können insbesondere nicht-glatte Oberflächen eingesetzt werden, da diese eine stark erhöhte Oberfläche im Vergleich zu glatten Oberflächen aufweisen. So kann die mindestens eine Kondensationsoberfläche beispielsweise mindestens eine aufgeraute Oberfläche aufweisen. Besonders bevorzugt sind dabei Rauigkeiten im Bereich zwischen 10 und 500 µm, wobei beispielsweise unter einer "Rauigkeit" eine RMS-Rauigkeit, also eine gemittelte Rauigkeit, zu verstehen ist. Rauigkeiten unterhalb des genannten Bereichs können an Effizienz einer Oberflächenvergrößerung verlieren, da übliche Tröpfchengrößen bereits diese Rauigkeit stark überschreiten, so dass anstelle der tatsächlichen Oberfläche eine "effektive" Oberfläche tritt. Rauigkeiten im Bereich oberhalb von 100 µm sind jedoch selbstverständlich möglich.

Weiterhin ist es auch möglich, die Kondensationsoberfläche mit geriffelten Oberflächen auszugestalten und die Kondensationsoberfläche derart auszuformen, dass diese eine Mehrzahl von Nuten und/oder eine Riffelung aufweist. Beispielsweise können die Nuten eine Tiefe zwischen 50 und 500 µm aufweisen, wobei jedoch auch andere Tiefen möglich sind. Die Nuten können darüber hinaus eine Breite im Bereich zwischen 50 µm und 1 mm aufweisen, oder auch in anderen Bereichen, sowie eine Länge, welche die Breite um vorzugsweise mindestens das Zehnfache übersteigt. Die Nuten können beispielsweise einen runden, rechteckförmigen, polygonalen oder dreieckförmigen Querschnitt oder eine andere Art von Querschnitt aufweisen und können beispielsweise in einer Mehrzahl parallel zueinander angeordnet sein. Auch ein Nutengitter ist jedoch möglich, und sogar (in Verallgemeinerung eines Nutengitters) eine Oberfläche in einer Waffeleisenstruktur. Weiterhin ist auch eine Oberflächenvergrößerung in Form von punktförmigen Vertiefungen, beispielsweise kugelsegmentförmigen Vertiefungen oder Vertiefungen mit einer anderen Ausgestaltung, in der Oberfläche möglich. Für die Tiefe dieser Vertiefungen sowie deren Breite bzw. Durchmesser kann beispielsweise auf die oben angegebenen Maße der Nuten verwiesen werden. Auch andere Ausgestaltungen sind jedoch möglich, sowie auch andere Formen der Vertiefungen.

Die erfindungsgemäße Vorrichtung in einer der oben beschriebenen Ausgestaltungen weist gegenüber herkömmlichen Vorrichtungen mit feuchtigkeitsempfindlichen Bauteilen eine Vielzahl von Vorteilen auf. So kann auf einfache und dennoch effiziente Weise ein Schutz der feuchtigkeitsempfindlichen Bauelemente bzw. Oberflächen vor Feuchtigkeit gewährleistet werden, ohne dass beispielsweise chemische Trockenmittel erforderlich sind. Derartige Trockenmittel können jedoch selbstverständlich zusätzlich eingesetzt werden.

Konstruktiv lassen sich die oben beschriebenen Maßnahmen leicht umsetzen. So können beispielsweise die Kondensationsoberflächen während des Herstellungsprozesses des Gehäuses miterzeugt werden, beispielsweise indem entsprechend ausgestaltete Werkzeuge, beispielsweise Spritzgießwerkzeuge, verwendet werden. Insbesondere können die beschriebenen Riffelungen, Vertiefungen, Nuten oder Waffelmuster auf diese Weise einfach erzeugt werden. Ein zusätzlicher konstruktiver Aufwand, wie beispielsweise in DE 10 2004 045 395 A1 beschrieben, ist somit nicht erforderlich, kann jedoch selbstverständlich zusätzlich betrieben werden.

Neben der Vorrichtung gemäß einem oder mehrerer der oben beschriebenen Ausführungsbeispiele wird weiterhin ein Verfahren zur Abschirmung eines feuchtigkeitsempfindlichen Bauelements vor Feuchtigkeit vorgeschlagen, welches unabhängig von der beschriebenen Vorrichtung durchgeführt werden kann, welches jedoch vorzugsweise eine Vorrichtung gemäß einer oder mehrerer der oben beschriebenen Ausführungsbeispiele verwendet. Insofern kann weitgehend auf die obige Beschreibung und die obigen Definitionen verwiesen werden.

Nach dem erfindungsgemäßen Verfahren wird das feuchtigkeitsempfindliche Bauelement in mindestens einem Innenraum des Gehäuses aufgenommen, was wiederum, wie oben beschrieben, ganz oder teilweise erfolgen kann, beispielsweise indem die feuchtigkeitsempfindliche Oberfläche in dem Innenraum des Gehäuses aufgenommen wird. Wiederum wird nach dem erfindungsgemäßen Verfahren mindestens eine dem Innenraum des Gehäuses zuweisende feuchtigkeitsempfindliche Kondensationsoberfläche verwendet, welche mindestens die 100-fache Oberfläche im Vergleich zur feuchtigkeitsempfindlichen Oberfläche aufweist. Auf die bevorzugten Ausgestaltungen dieser feuchtigkeitsunempfindlichen Kondensationsoberfläche gemäß der obigen Beschreibung kann verwiesen werden.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1A und 1B: eine Prinzipdarstellung des erfindungsgemäßen Verfahrens einer Verwendung von Kondensationsoberflächen; und
- Figur 2: ein Ausführungsbeispiel einer erfindungsgemäßen Vorrichtung.

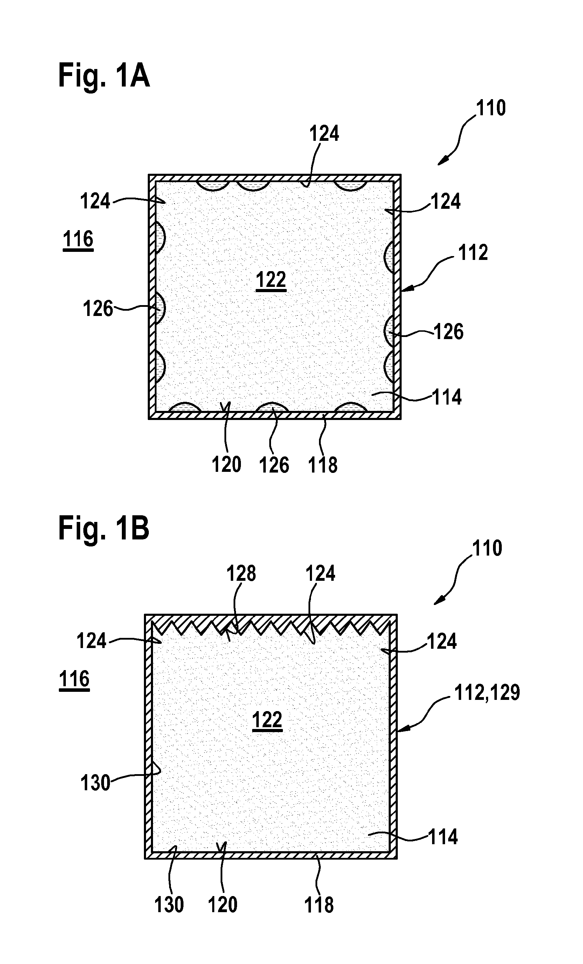

In den Figuren 1A und 1B sind eine herkömmliche Vorrichtung 110 (Figur 1A) und eine erfindungsgemäß ausgestaltete Vorrichtung (Figur 1B) einander gegenübergestellt. Die Vorrichtung 110 umfasst jeweils ein Gehäuse 112, welches einen Innenraum 114 gasdicht gegenüber einem Außenraum 116 abschließt. Weiterhin umfasst die Vorrichtung 110 ein feuchtigkeitsempfindliches Bauelement 118, welches in den Figuren lediglich stilisiert dargestellt ist, und welches mindestens eine feuchtigkeitsempfindliche Oberfläche 120 aufweist, die dem Innenraum 114 zuweist.

Naturgemäß ist im Innenraum 114 zumindest eine gewisse Restmenge an Feuchtigkeit auf genommen, welche in den Figuren 1A und 1B symbolisch mit der Bezugsziffer 122 bezeichnet ist. Je nach beispielsweise der Temperatur des Gehäuses 112 kommt es daher an Innenwänden 124 des Gehäuses 112, welche dem Innenraum 114 zuweisen, zu Kondensationseffekten, welche in Figur 1A symbolisch durch Kondensationströpfchen 126 dargestellt sind. Auch auf der feuchtigkeitsempfindlichen Oberfläche 120 kommt es bei der dem Stand der Technik entsprechenden Vorrichtung 110 gemäß Figur 1A zu Kondensationseffekten.

Bei der Vorrichtung 110 gemäß dem erfindungsgemäßen Ausführungsbeispiel in Figur 1B ist hingegen eine feuchtigkeitsunempfindliche Kondensationsoberfläche 128 vorgesehen, welche in diesem Ausführungsbeispiel einstückig mit der Innenwand 124 des Gehäuses 112 ausgebildet ist. Das Gehäuse 112 bildet somit gemeinsam mit der Kondensationsoberfläche 128 eine Abschirmvorrichtung 129. Die Kondensationsoberfläche 128 kann beispielsweise, wie in Figur 1B dargestellt, eine Riffelung aufweisen, welche hier beispielhaft als Riffelung mit dreieckförmigem Querschnitt ausgebildet ist. Diese Kondensationsoberfläche 128 hat eine erheblich gegenüber der feuchtigkeitsempfindlichen Oberfläche 120 erhöhte Oberfläche und wirkt somit als Kondensationsfalle. Es bildet sich somit ein beispielsweise bei optischen oder elektro-optischen Systemen noch akzeptabler Kondensatfilm 130 auf der gesamten Innenoberfläche des Gehäuses 112 und dem feuchtigkeitsempfindlichen Bauelement 118 aus. Insgesamt sind die Kondensationseffekte gegenüber der Vorrichtung 110 gemäß Figur 1A stark vermindert.

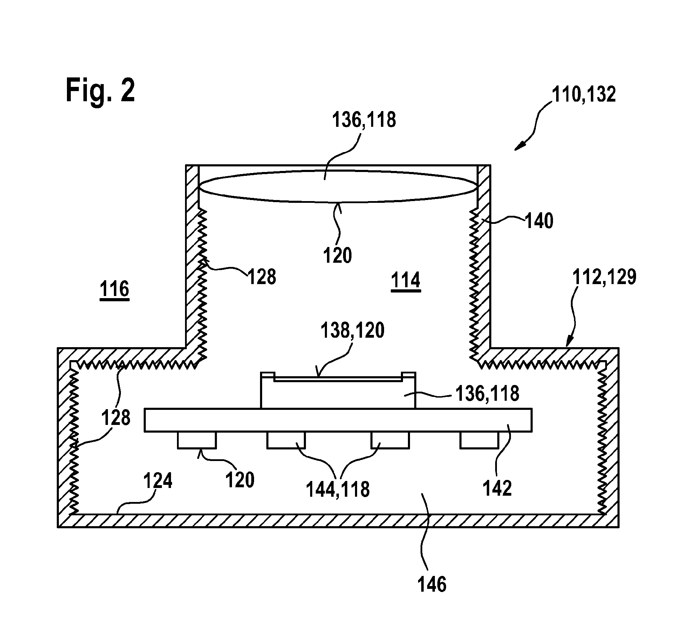

In Figur 2 ist ein mögliches Ausführungsbeispiel einer Vorrichtung 110 dargestellt, indem das in Figur 1B gezeigte Prinzip umgesetzt werden kann. Beispielsweise handelt es sich bei dieser Vorrichtung 110 um ein Bildaufnahmesystem 132, mit einem Gehäuse 112, einem Linsensystem 134 und einem Imager 136. Der Imager 136 stellt in diesem Fall ein feuchtigkeitsempfindliches Bauelement 118 dar, wobei beispielsweise eine dem Linsensystem 134 zuweisende bildsensitive Oberfläche 138 als feuchtigkeitsempfindliche Oberfläche 120 wirkt, welche möglichst effizient vor Kondensationseffekten geschützt werden sollte.

Es sei darauf hingewiesen, dass in Figur 2 sämtliche Komponenten lediglich symbolisch dargestellt sind. So kann beispielsweise das Linsensystem 134 als Linsensystem mit mehreren optischen Elementen ausgestaltet sein, wobei neben einer oder mehreren einzelnen Linsen auch andere Elemente vorgesehen sein können, wie beispielsweise Blenden, Spiegel, Gitter oder ähnliche optische Elemente oder Elementkombinationen. Insbesondere kann das Linsensystem 134 als Objektiv ausgestaltet sein, um beispielsweise ein Bild auf die bildsensitive Oberfläche 138 des Imagers 136 zu projizieren.

Das Gehäuse 112 kann einstückig oder mehrstückig ausgebildet sein und kann beispielsweise einen Objektivtubus 140 umfassen, in welchem das Linsensystem 134 ganz oder teilweise aufgenommen sein kann.

Der Imager 136 kann beispielsweise als CCD-Chip ausgestaltet sein und kann beispielsweise auf einer Platine 142 aufgenommen sein. Daneben können weitere elektronische Bauelemente 144 in der Vorrichtung 110 vorgesehen sein, welche beispielsweise ebenfalls auf der Platine 142 aufgenommen sein können.

Um den oben beschriebenen Kondensationsfalleneffekt zu bewirken, ist das Gehäuse 112 in diesem Fall derart ausgestaltet, dass dieses wiederum eine Kondensationsoberfläche 128 umfasst, welche gemeinsam mit dem Gehäuse 112 eine Abschirmvorrichtung 129 bildet. Diese Kondensationsoberfläche ist wiederum in Form einer Riffelung und/oder eines Waffelmusters an der Innenwand 124 des Gehäuses 112 ausgestaltet. Dabei ist in diesem Ausführungsbeispiel gemäß Figur 2 die Kondensationsoberfläche 128 im Bereich des Objektivtubus 140 sowie in einem Bereich eines Korpus 146 des Gehäuses 112, in welchem die Platine 142 und der Imager 136 aufgenommen sind, angeordnet. Dabei bedeckt in diesem Ausführungsbeispiel die Kondensationsoberfläche 128 jedoch nicht die gesamte Innenwand 124 des Gehäuses 112.

Es sei darauf hingewiesen, dass auch andere Ausgestaltungen der Vorrichtung 110 möglich sind. So ist beispielsweise in dem in Figur 2 dargestellten Ausführungsbeispiel das Gehäuse 112 lediglich mit einem einzelnen Innenraum 114 versehen. Dieser Innenraum 114 könnte jedoch auch in mehrere einzelne, voneinander getrennte Innenräume 114 unterteilt sein, welche in diesem Fall vorzugsweise jeweils einzeln mit Kondensationsoberflächen 128 ausgestaltet wären. So kann beispielsweise das Linsensystem 134 mehrere einzelne Linsen umfassen, zwischen denen jeweils voneinander getrennte Innenräume 114 ausgebildet sind. In diesem Fall kann beispielsweise auf die Ausgestaltung der DE 10 2004 045 395 A1 verwiesen werden. Jeder einzelne dieser Zwischenräume zwischen den Linsen könnte in diesem Fall mit einer oder mehreren Kondensationsoberflächen 128 ausgestaltet werden.

Insgesamt führt die erfindungsgemäße Vergrößerung der für die Kondensation zur Verfügung stehenden Gesamtoberfläche durch Bereitstellung der Kondensationsoberflächen 128 zu einer erheblichen Reduktion kondensierter Feuchtigkeit auf der feuchtigkeitsempfindlichen Oberfläche 120 im Inneren des begrenzten Volumens des Innenraums 114. Somit lassen sich funktionale Degradations- oder Ausfalleffekte, welche beispielsweise hier durch einen Beschlag der feuchtigkeitsempfindlichen Oberflächen 120 des Linsensystems 134, des Imagers 136 und/oder der elektronischen Bauelemente 144 entstehen würden, reduzieren oder sogar ganz vermeiden. Hierdurch wird das Degradations- oder Ausfallrisiko der gesamten Vorrichtung 110 stark vermindert.

## Patentansprüche

1. Vorrichtung (110), insbesondere ein Bildaufnahmesystem (132), umfassend mindestens ein feuchtigkeitsempfindliches Bauelement (118) mit mindestens einer feuchtigkeitsempfindlichen Oberfläche (120) sowie mindestens eine Abschirmvorrichtung (129) zur Abschirmung des feuchtigkeitsempfindlichen Bauelements (118) vor Feuchtigkeit, wobei die Abschirmvorrichtung (129) mindestens ein Gehäuse (112) aufweist, welches eingerichtet ist, um in mindestens einem Innenraum (114) des Gehäuses (112) das feuchtigkeitsempfindliche Bauelement (118) aufzunehmen, **dadurch gekennzeichnet, dass** die Vorrichtung (110) mindestens eine dem Innenraum (114) zuweisende feuchtigkeitsunempfindliche Kondensationsoberfläche (128) aufweist, welche mindestens die 100-fache Oberfläche im Vergleich zur feuchtigkeitsempfindlichen Oberfläche (120) aufweist.

2. Vorrichtung (110) nach dem vorhergehenden Anspruch, wobei das feuchtigkeitsempfindliche Bauelement (118) mindestens eines der folgenden Bauelemente umfasst: ein optisches Bauelement (134), insbesondere eine Linse, ein optisches Gitter, eine Blende oder einen Spiegel; ein Sensorbauelement, insbesondere ein optisches Sensorbauelement, ein akustisches Sensorbauelement oder einen Temperatursensor; einen Bildaufnehmer (136), insbesondere einen CCD-Chip; ein Schutzglas und/oder ein LID; ein elektronisches Bauelement (144).

3. Vorrichtung (110) nach einem der vorhergehenden Ansprüche, wobei die Vorrichtung (110) eine Bildgebungsfunktion aufweist.

4. Vorrichtung (110) nach einem der vorhergehenden Ansprüche, wobei das Gehäuse (112) den Innenraum (114) luftdicht abschließt.

5. Vorrichtung (110) nach einem der vorhergehenden Ansprüche, wobei die Kondensationsoberfläche (128) mindestens eine aufgeraute Oberfläche, insbesondere eine Oberfläche mit einer Rauigkeit im Bereich zwischen 10 und 100 Mikrometern, aufweist.

6. Vorrichtung (110) nach einem der vorhergehenden Ansprüche, wobei die Kondensationsoberfläche (128) eine Mehrzahl von Nuten und/oder eine Riffelung aufweist.

7. Vorrichtung (110) nach dem vorhergehenden Anspruch, wobei die Kondensationsoberfläche (128) ein Gitter von Nuten aufweist.

8. Vorrichtung (110) nach einem der vorhergehenden Ansprüche, wobei die Kondensationsoberfläche (128) eine Mehrzahl von Vertiefungen und/oder ein Waffelmuster aufweist.

9. Verfahren zur Abschirmung eines feuchtigkeitsempfindlichen Bauelements (118) vor Feuchtigkeit, wobei das feuchtigkeitsempfindliche Bauelement (118) mindestens eine feuchtigkeitsempfindliche Oberfläche (120) aufweist, wobei das feuchtigkeitsempfindliche Bauelement (118) in mindestens einem Innenraum (114) eines Gehäuses (112) aufgenommen wird, wobei mindestens eine dem Innenraum (114) des Gehäuses (112) zuweisende feuchtigkeitsunempfindliche Kondensationsoberfläche (128) verwendet wird, welche mindestens die 100-fache Oberfläche im Vergleich zur feuchtigkeitsempfindlichen Oberfläche (120) aufweist.

10. Verfahren nach dem vorhergehenden Anspruch, wobei eine Vorrichtung (110) nach einem der vorhergehenden, auf eine Vorrichtung (110) gerichteten Ansprüche verwendet wird.
